Europäisches Patentamt

European Patent Office

Office européen des brevets

(11) Numéro de publication: **0 313 491**
**A1**

## (12) DEMANDE DE BREVET EUROPEEN

(21) Numéro de dépôt: **88460022.2**

(22) Date de dépôt: **11.10.88**

(51) Int. Cl.4: **H 04 L 27/20**

(30) Priorité: **21.10.87 FR 8714755**

(43) Date de publication de la demande:
**26.04.89 Bulletin 89/17**

(84) Etats contractants désignés: **DE GB IT NL**

(71) Demandeur: **Verdot, Georges**
**32, rue de l'Aérodrome**
**F-22300 Lannion (FR)**

(72) Inventeur: **Verdot, Georges**
**32, rue de l'Aérodrome**
**F-22300 Lannion (FR)**

(74) Mandataire: **Le Guen, Louis François**
**CABINET Louis LE GUEN 38, rue Levavasseur B.P. 91**
**F-35802 Dinard Cédex (FR)**

(54) **Modulateur par déplacement de phase à quatre états, notamment pour modulation d'amplitude à deux porteuses en quadrature à grand nombre d'états.**

(57) Le modulateur comporte un générateur de signaux HF à quatre sorties (Q5 à Q8) délivrant le signal avec quatre phases décalées de 90°. Un sélecteur de phase à quatre entrées de porteuse reliées aux sorties (Q5 à Q8), quatre entrées de signaux modulants et quatre sorties de porteuses déphasées. Chaque entrée de signal modulant est reliée à l'entrée de commande d'un commutateur (9 à 12) monté entre une entrée de porteuse et une sortie de porteuse déphasée.

Le générateur comporte une source de signaux (Ho, Ho/) en opposition de phase et deux diviseurs de fréquence (3 et 4) à deux sorties (Q3, Q3/ et Q4, Q4/) en opposition de phase. Il comprend encore deux paires de bascules (5, 6 et 7, 8) dont les sorties (Q5, Q6, Q7 et Q8) forment les quatre sorties du générateur. Les entrées de signal des bascules (5 et 6) sont reliées aux sorties (Q3 et Q3/) du premier diviseur et les entrées de signal des bascules (7 et 8) sont reliées au sorties (Q4 et Q4/) du second diviseur. les sorties de porteuses déphasées sont reliées aux entrées d'une porte OU (13). Entre les entrées d'horloge des bascules et la masse sont prévus des condensateurs variables (C1 à C4).

Un modulateur MAQ $2^{2n}$ comprend n tels modulateurs MDP4 dont les sorties sont reliées aux entrées de n atténuateurs suivi d'un sommateur.

FIG. 1

EP 0 313 491 A1

## Description

## Modulateur par déplacement de phase à quatre états, notamment pour modulation d'amplitude à deux porteuses en quadrature à grand nombre d'états

La présente invention concerne un modulateur par déplacement de phase pour modulation d'amplitude à deux porteuses en quadrature à grand nombre d'états ou modulation MAQ $2^{2n}$.

On rappelle qu'un signal à modulation par déplacement de phase à quatre états ou signal MDP4 est formé d'une porteuse sinusoïdale de fréquence fo qui prend un état de phase parmi quatre états de phase possibles: 0°, 90°, 180° et 270°, en fonction du signal numérique modulant.

Par ailleurs, les systèmes de transmission numérique à modulation MAQ $2^{2n}$, où n est grand, c'est-à-dire égal ou supérieur à 2, présentent un grand intérêt et sont désormais largement répandus dans les systèmes hertziens aux Etats-Unis et, dans une moindre mesure au Japon. La fonction modulation y est réalisée en utilisant des modulateurs en anneau de haute qualité. A ce sujet, on pourra se reporter aux documents suivants:
- "Design and Application of the RD-4A and RD-6A 64 QAM Digital Radio Systems" par J.D. McNicol et al., paru dans ICC'84 Conf. Rec Vol. 2, pp. 646-652,
- "64 QAM Digital Radio Transmission System. Integration and Performance" par J.A. Grosset and P.R. Hartmann, paru dans ICC'84 Conf. Rec. Vol. 2, pp. 636-641,
- "Design and Performance of 6 GHz 135 Mb/s Radio System with 64 QAM" par Y. Ito et al., paru dans ICC'84 Conf. Rec. Vol. 2,pp.632-635,
- "256 QAM Modem for High Capacity Digital Radio Systems" par Y. Daido et al., paru dans Globecom'84, Vol. 2, pp. 16.8.1-16.8.5.

Les modulateurs en anneau de haute qualité sont chers. D'autre part, il s'agit de composants analogiques, ce qui rend leur intégration impossible et augmente le volume des modulateurs.

On sait aussi réaliser des modulations MAQ $2^{2n}$ à partir de modulations élémentaires produites dans des modulateurs MDP4 dont les signaux de sortie subissent des atténuations sélectives avant d'être sommés, mais seuls sont alors utilisables des modulateurs MDP4 de grande précision.

Il est également connu, d'après le document FR-A-2 469 062, un modulateur MDP4 dans la construction duquel n'entrent pratiquement que des circuits logiques. Ce modulateur MDP4 peut donc être fabriqué sous forme intégrée et a d'autres qualités. Toutefois, en ce qui concerne la précision sur les phases des différents états, elle atteint le degré, ce qui est tout-à-fait suffisant quand le modulateur MDP4 est utilisé seul, mais demeure insuffisant quand on somme plusieurs signaux pour obtenir une modulation MAQ d'ordre élevé.

Dans le document FR-A-2 589 298 est également décrit un modulateur MDP4 dans la structure physique duquel n'entrent que des circuits logiques intégrables et dont la précision sur les phases est meilleure qu'un dixième de degré, ce qui est suffisant pour réaliser des modulations MAQ d'ordre élevé avec intégration des circuits. Toutefois, ce modulateur ne convient pas pour les très hautes vitesses de modulation. En effet, les passages des signaux délivrés par le sélecteur dans des bascules D entraînent que les transitions entre états de phase se produisent en synchronisme avec les transitions de l'horloge d'entrée et non avec les transitions des trains modulants. Cela provoque, en réception, une gique sur l'horloge récupérée et l'importance de ce défaut augmente avec la vitesse de modulation.

Un objet de la présente invention consiste à prévoir un modulateur MDP4, dans lequel on conserve tous les avantages du modulateur décrit dans le brevet FR-A-2 589 298 et qui soit utilisable à vitesse de modulation élevée.

Suivant une caractéristique de l'invention, il est prévu un modulateur par déplacement de phase à quatre états comportant un générateur de signaux haute fréquence pourvu de quatre sorties délivrant ce signal avec quatre phases différentes, respectivement décalées de 90°, un sélecteur de phase ayant quatre entrées de porteuse respectivement reliées aux quatre sorties du générateur, quatre entrées de signaux modulants et quatre sorties de porteuses déphasées, chaque entrée de signal modulant étant reliée à l'entrée de commande d'un commutateur monté entre une entrée de porteuse et une sortie de porteuse correspondante, le générateur comportant une source de signaux opposés en phase, deux diviseurs de fréquence à deux sorties en opposition de phase, l'entrée du premier diviseur étant reliée à la première sortie de la source et l'entrée du second diviseur étant reliée à la seconde sortie de la source, deux paires de bascules dont les sorties forment les quatre sorties du générateur, les entrées d'horloge des bascules de la première paire étant reliées à la première sortie de la source et les entrées d'horloge des bascules de la seconde paire étant reliées à la seconde sortie de la source, les entrées de signal des bascules de la première paire étant respectivement reliées aux sorties du premier diviseur et les entrées de signal des bascules de la seconde paire étant respectivement reliées aux sorties du second diviseur, les quatre sorties du porteuses déphasées étant respectivement reliées aux quatre entrées d'une porte OU délivrant le signal à modulation MDP4.

Suivant une autre caractéristique, entre les entrées d'horloge des bascules et la masse sont prévus des condensateurs variables de circuits RC.

Suivant une autre caractéristique, il est prévu un modulateur MAQ $2^{2n}$ comprenant n tels modulateurs MDP4 dont les sorties sont respectivement reliées aux entrées de n atténuateurs ayant respectivement des coefficients d'atténuation 6(n-1), avec n variant de 1 à n, les sorties des atténuateurs étant respectivement reliées aux n entrées d'un sommateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est le schéma d'un modulateur MDP4 suivant l'invention,

la Fig. 2 montre des diagrammes temporels illustrant le fonctionnement du modulateur de la Fig. 1, et

la Fig. 3 est le bloc-diagramme d'un modulateur MAQ $2^{2n}$ suivant l'invention.

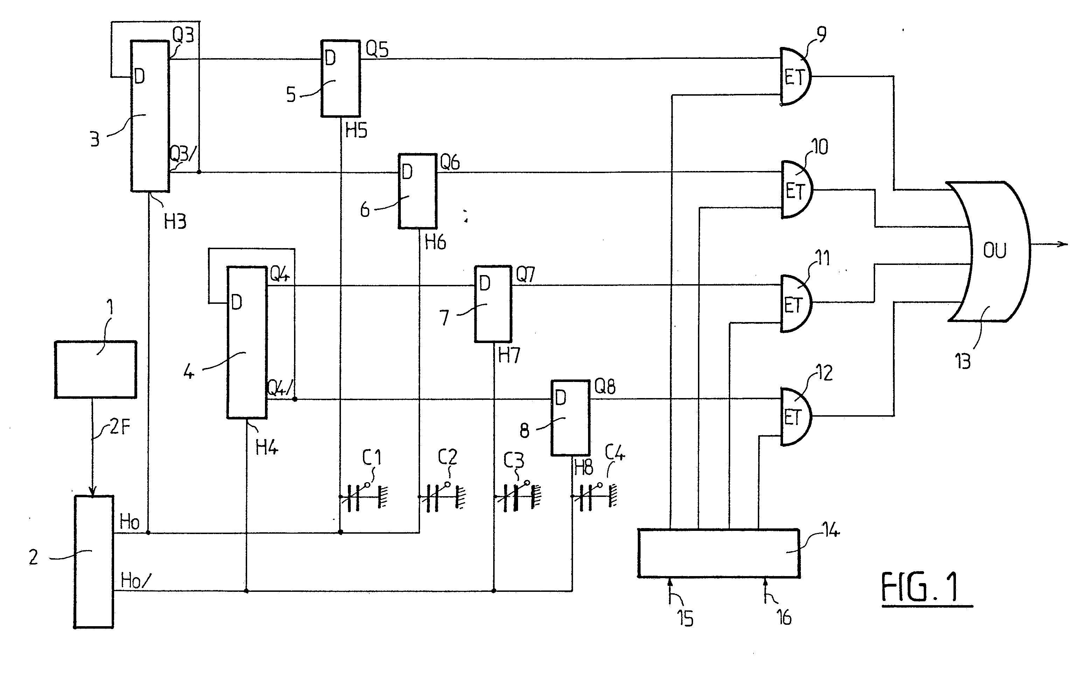

Le modulateur MDP4 de la Fig. 1 comprend une source 1 qui délivre un signal 2F dont la fréquence est double de la fréquence fo. La sortie de la source 1 est reliée à l'entrée d'un diviseur de fréquence 2 qui a deux sorties, l'une délivrant le signal Ho et l'autre son complément Ho/. Dans la suite, le signe / placé derrière la référence d'un signal désigne le complément de ce signal.

La sortie Ho, délivrant le signal portant la même référence, est reliée à l'entrée d'horloge H3 d'une bascule 3 dont la sortie inverse Q3/ est reliée à son entrée de signal D. La sortie Ho/, délivrant le signal portant la même référence, est reliée à l'entrée d'horloge H4 d'une bascule 4 dont la sortie inverse Q4/ est également reliée à son entrée D. Les bascules 3 et 4, comme les autres bascules utilisées dans le modulateur, sont des bascules de type D.

La sortie directe Q3 de la bascule 3 est reliée à l'entrée D d'une bascule 5 dont l'entrée d'horloge H5 reçoit le signal Ho. La sortie inverse Q3/ de la bascule 3 est reliée à l'entrée D d'une bascule 6 dont l'entrée d'horloge H6 reçoit aussi le signal Ho.

La sortie directe Q4 de la bascule 4 est reliée à l'entrée D d'une bascule 7 dont l'entrée d'horloge H7 reçoit le signal Ho/. La sortie inverse Q4/ de la bascule 4 est reliée à l'entrée D d'une bascule 8 dont l'entrée d'horloge H8 reçoit aussi le signal Ho/.

Les entrées d'horloge H5 à H8 des bascules 5 à 8 sont respectivement reliées à la masse par des condensateurs variables C1 à C4.

Les sorties directes Q5 à Q8 des bascules 5 à 8 sont respectivement reliées aux premières entrées de portes ET 9 à 12 dont les secondes entrées sont respectivement reliées aux sorties S1 à S4 d'un décodeur de données 14. Le décodeur 14 comporte une entrée à deux fils 15 et 16 auxquels sont appliqués les éléments binaires ou bits du signal modulant. L'ensemble des éléments 9 à 12 et 14 forme un sélecteur de phase. Les sorties des portes ET 9 à 12 sont respectivement reliées aux quatres entrées d'une porte OU 13 qui délivre le signal modulé.

Les condensateurs variables C1 à C4 servent à ajuster les phases des signaux appliqués aux entrées d'horloge des bascules 5 à 8, c'est-à-dire à ajuster les phases des signaux délivrés par les sorties Q de ces bascules.

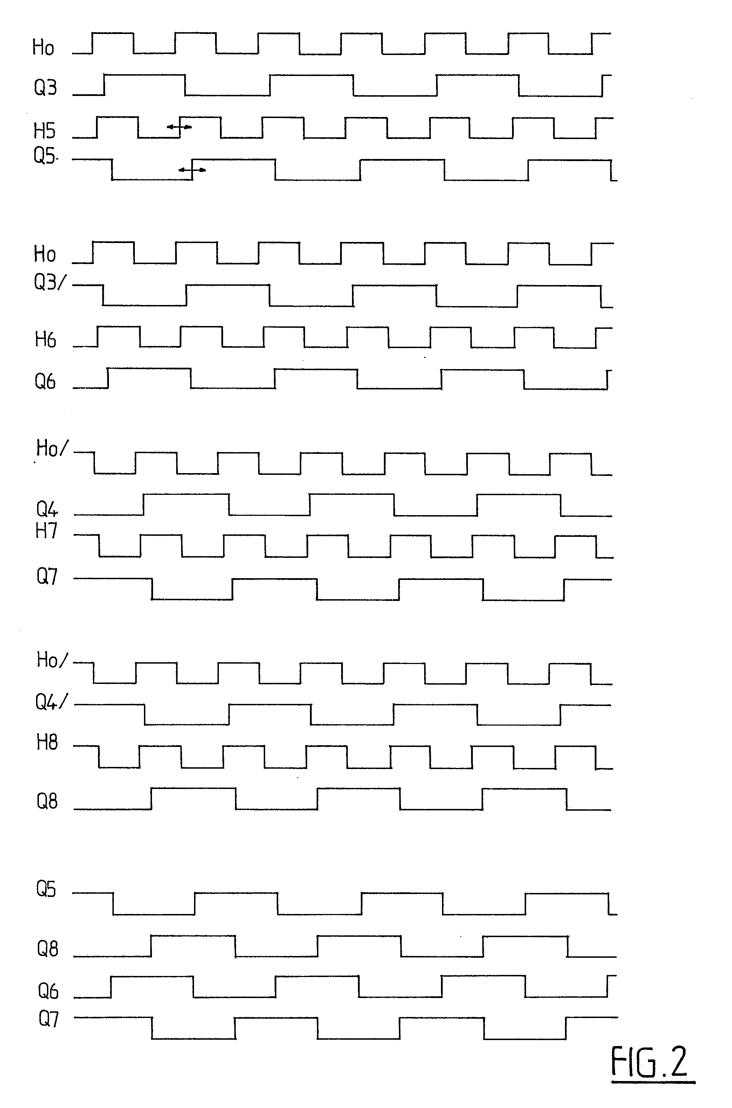

Les diagrammes temporels de la Fig. 2 sont des formes d'onde de signaux qui sont identifiées par les bornes d'entrée auxquelles les signaux sont appliqués ou par les bornes de sortie qui délivrent ces signaux. Ainsi, au signal appliqué à l'entrée H3 de la bascule 3 correspond la forme d'onde H3, et au signal délivré par la sortie Q3 correspond le signal Q3, etc.

Les diagrammes de la Fig. 2 montrent que la bascule 3 fonctionne en diviseur par deux et que le front avant du signal Ho met la sortie Q3 au niveau haut quand la sortie Q3/ est au niveau haut. Le signal H5 a la même fréquence que le signal Ho, mais a un léger retard par rapport à celui-ci. Ce retard, petit par rapport à la période, est réglable au moyen du condensateur variable C1. Le réglage du retard peut être fait au dixième de degré près. Quand le signal H5 est appliqué alors que le signal Q3 est au niveau haut, ce niveau est recopié sur la sortie Q5 avec un retard correspondant au temps de transit de la bascule 5. A la Fig. 2, on a, sur le front montant actif de H5 et le front montant de Q5, montré des petites flèches qui indiquent que les instants des fronts montants peuvent être réglés en phase au moyen du condensateur variable C1.

La Fig. 2 montre de la même manière les formes d'onde des signaux permettant d'obtenir les signaux Q6, Q7 et Q8, les formes d'onde de ces signaux étant répétées pour montrer leurs décalages dans le temps d'un quart de période.

A chaque symbole quaternaire 00, 01, 10 ou 11 constitué par la paire de bits appliqués au rythme du train de bits, correspond une des quatre sorties du décodeur 14 activée pendant un temps d'horloge Ho. Pendant la période d'un symbole, une des portes 9 à 12 est ouverte et une seule, les trois autres étant inhibées.

Par rapport au document FR-A-2 589 298 dans lequel les bascules de mise en forme des signaux fonctionnent sur les signaux modulés si bien qu'à la réception, la régénération de l'horloge du train de bits était perturbée, dans le modulateur de l'invention, les signaux modulants sont appliqués derrière les bascules de mises en forme, elles-mêmes réglables en phase, La gigue due au modulateur est donc supprimée ce qui facilite la régénération de l'horloge bit.

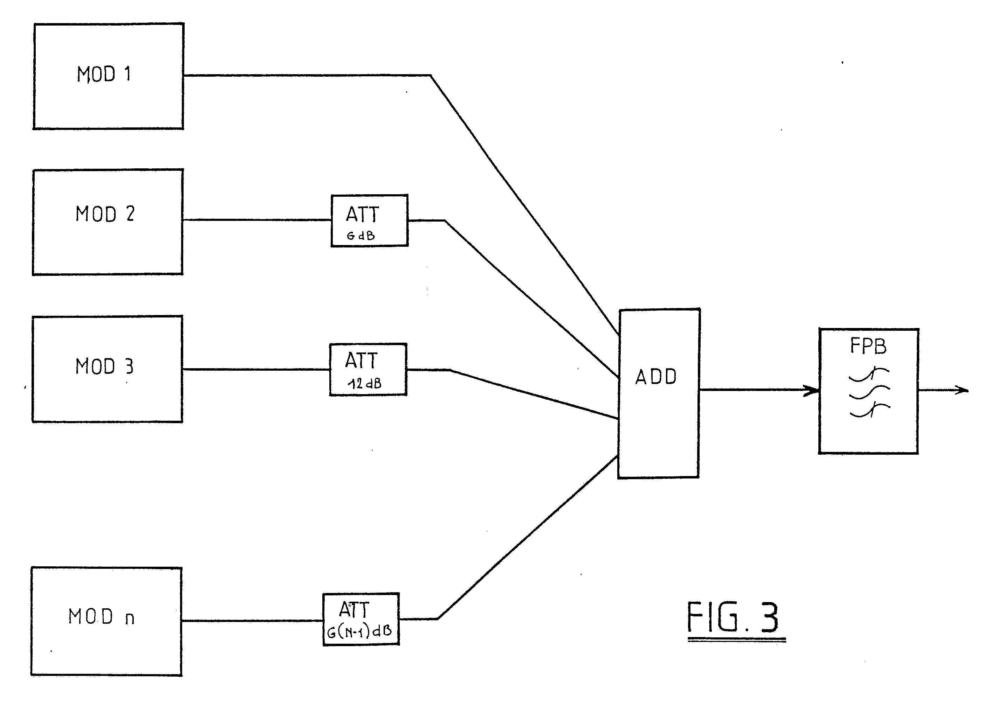

Le modulateur MDP4 de la Fig. 1 est utilisable pour engendrer des modulations MAQ16, MAQ64 ou des modulation MAQ d'ordre encore plus élevé. Le modulateur de la Fig. 3 comprend n modulateurs MDP4 élémentaires MOD1 à MODn, qui sont chacun identique au modulateur de la Fig. 1. Les sorties des modulateurs MOD2 à MODn sont respectivement reliées aux entrées de (n-1) atténuateurs ATT2, ATT3, ..., ATTn dont les coefficients d'atténuation sont respectivement 6 dB, 12 dB, ..., 6(n-1) dB. La sortie du modulateur MOD1 et celles des atténuateurs ATT2 à ATTn sont respectivement reliées aux entrées d'un additionneur ADD dont la sortie délivre le signal à modulation MAQ $2^{2n}$.

La sortie de l'additionneur ADD est, de préférence, reliée à un filtre passe-bande FPB centré sur la fréquence fo de la porteuse et dont la largeur de bande est fonction de la fréquence rythme des trains binaires modulants.

**Revendications**

1) Modulateur par déplacement de phase à quatre états comportant un générateur de signaux haute fréquence pourvu de quatre sorties (Q5 à Q8) délivrant ce signal avec quatre phases différentes, respectivement décalées de 90°, un sélecteur de phase ayant quatre entrées de porteuse respectivement reliées aux quatre sorties (Q5 à Q8) du générateur, quatre entrées de signaux modulants et quatre sorties de porteuses déphasées, chaque entrée de signal modulant étant reliée à l'entrée de commande d'un commutateur (9 à 12) monté entre une entrée de porteuse et une sortie de porteuse correspondante, caractérisé en ce que le générateur comporte une source (1-2) de signaux (Ho, Ho/) en opposition de phase, deux diviseurs de fréquence (3 et 4) à deux sorties (Q3, Q3/ et Q4, Q4/) en opposition de phase, l'entrée d'horloge du premier diviseur (3) étant reliée à la première sortie (Ho) de la source et l'entrée d'horloge du second diviseur (4) étant reliée à la seconde sortie (Ho/) de la source, deux paires de bascules (5, 6 et 7, 8) dont les sorties (Q5, Q6, Q7 et Q8) forment les quatre sorties du générateur, les entrées d'horloge (H5 et H6) des bascules (5 et 6) de la première paire étant reliées à la première sortie (Ho) de la source et les entrées d'horloge des bascules (7 et 8) de la seconde paire étant reliées à la seconde sortie (Ho/) de la source, les entrées de signal des bascules (5 et 6) de la première paire étant respectivement reliées aux sorties (Q3 et Q3/) du premier diviseur et les entrées de signal des bascules (7 et 8) de la seconde paire étant respectivement reliées aux sorties (Q4 et Q4/) du second diviseur, les quatre sorties de porteuses déphasées étant respectivement reliées aux quatre entrées d'une porte OU (13) délivrant le signal à modulation MDP4.

2) Modulateur suivant la revendication 1, caractérisé en ce qu'entre les entrées d'horloge (H5 à H8) des bascules (5 à 8) et la masse sont prévus des condensateurs variables (C1 à C4) de circuits RC.

3) Modulateur MAQ $2^{2n}$ comprenant n modulateurs MDP4 (MOD1 à MODn) dont les sorties sont respectivement reliées aux entrées de n atténuateurs ayant respectivement des coefficients d'atténuation $6(n-1)$, avec n variant de 1 à n, les sorties des atténuateurs étant respectivement reliées aux n entrées d'un sommateur (ADD), caractérisé en ce que les modulateurs MDP4 sont des modulateurs suivant l'une des revendications 1 ou 2.

4

FIG.1

FIG.2

FIG. 3

EP 0 313 491 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 225 269 (VERDOT)<br>* Figures 1,2; revendications 1-4 * &<br>FR-A-2 589 298 (Cat. D)<br>--- | 1-3 | H 04 L 27/20 |
| A,D | FR-A-2 469 062 (BAILLY)<br>* Page 3, ligne 35 - page 4, ligne 5; figure 2 *<br>--- | 1 | |
| A | EP-A-0 031 762 (BIC)<br>* Page 11, lignes 20-32; figure 5 *<br>----- | 1 | |

DOMAINES TECHNIQUES
RECHERCHES (Int. Cl.4)

H 04 L

Le présent rapport a été établi pour toutes les revendications

| Lieu de la recherche | Date d'achèvement de la recherche | Examinateur |
|---|---|---|
| LA HAYE | 22-12-1988 | VEAUX,C.J. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P0402)